# EUROPEAN PATENT APPLICATION

(11) **EP 1 016 697 A1**
(43) Date of publication of application: **05.07.2000**
(21) Application number: 99403295.1
(22) Date of filing: 28.12.1999
(51) Int. Cl.: C09D 5/44, C08G 59/14, C09D 163/00

(54) **Cationic electrodeposition coating composition**

(30) Priority: 28.12.1998 JP 37249298
(71) Applicant: Nippon Paint Co., Ltd., Osaka-shi, Osaka 531-0077 (JP)
(72) Inventor: Sakamoto, Hiroyuki, Kobe-shi, Hyogo 658-0032 (JP); Takeshita, Sho, Ibarakishi, Osaka 567-0872 (JP); Kawakami, Ichiro, Takatsuki-shi, Osaka 569-1044 (JP); Uchidoi, Satoru, Osaka-shi, Osaka 535-0003 (JP); Saito, Takao, Toyonaka-shi, Osaka 560-0002 (JP)
(74) Representative: Hubert, Philippe

(57) **Abstract**

A cationic electrodeposition coating composition is provided which can provide coatings having corrosion resistance without using any rust preventive pigment possibly causing environmental pollution, for example a lead compound. The composition comprises a rust preventive comprising a calcium- and/or zinc-containing phosphite or a silicate compound as well as a sulfonium- and propargyl-containing resin composition.

## Description

### FILED OF THE INVENTION

The present invention relates to a cationic electrodeposition coating composition, in particular a lead-free cationic electrodeposition coating composition.

### PRIOR ART

Electrodeposition coating compositions are excellent in corrosion resistance and throwing power and can form uniform coatings and, therefore, are widely used, especially as primers for automotive bodies and parts. From the corrosion prevention viewpoint, in particular, cationic electrodeposition coating compositions have now been used widely. In cationic electrodeposition coating compositions, rust preventive pigments, such as lead compounds, for example basic lead silicate, have been used to attain high corrosion resistance. In recent years, however, the use of lead compounds has been restricted because of their toxicity which causes an environmental pollution problem, among others. Therefore, the so-called lead-free cationic electrodeposition coating compositions are required, and rust preventive pigments capable of serving as alternatives to lead compounds are demanded.
So far, phosphate pigments, molybdate pigments and borate pigments, among others, have been tested as such alternatives. These, however, have a drawback; they are inferior in rust preventing effect when compared with lead compounds. As for other proposals, JP Kokai H02-279773 discloses the use of iron oxide, JP Kokai H04-325572 discloses the use of copper, nickel, zinc, cobalt, chromium, aluminum, manganese, zirconium, tin or iron, JP Kokai H05-140487 discloses the use of bismuth hydroxide/tin, cerium hydroxide/tin or nickel hydroxide/tin, JP Kokai H05-239386 discloses the use of lantanum compounds, JP Kokai H05-247385 discloses the use of bismuth compounds/tin and, further, JP Kokai H06-220371 discloses the use of tungsten compounds. In every case, however, the anticorrosive effect is unsatisfactory. Many of these materials are heavy metals or heavy metal-containing compounds, inclusive of those materials which have not yet been proved to be safe. In the conventional cationic electrodeposition coating compositions for which a blocked isocyanate is used as the curing agent, lead compounds are considered to serve as curing catalysts as well. It is a problem that when they are excluded from the system, the amount of tin compounds, which are curing catalysts proper, must be increased.

It is an object of the present invention to provide a cationic electrodeposition coating composition which is free not only of lead but also of rust preventive pigments possibly causing environmental pollution and can give coatings or coating films having high corrosion resistance.

### SUMMARY OF THE INVENTION

The present invention provides a cationic electrodeposition coating composition which comprises a rust preventive comprising a calcium-and/or zinc-containing phosphite salt or a silicate compound and a sulfonium- and propargyl-containing resin composition, with which the problems mentioned above are solved and the above objects are accomplished.

In a preferred embodiment, said cationic electrodeposition coating composition has the content of 0.1 to 35% by weight of said rust preventive.

In another preferred embodiment, the resin composition of the cationic electrodeposition coating composition has a sulfonium group content of 5 to 400 millimoles and a propargyl group content of 10 to 495 millimoles per 100 grams of the solid matter in the resin composition, the total content of the sulfonium and propargyl group being not more than 500 millimoles per 100 grams of the solid matter in the resin composition.

According to the cationic electrodeposition coating composition of the present invention, said resin composition preferably comprises a resin having an epoxy backbone, in particular, a novolak phenol type epoxy resin or novolak cresol type epoxy resin having a number average molecular weight of 700 to 5,000 and wherein said resin composition has a sulfonium group content of 5 to 250 millimoles and a propargyl group content of 20 to 395 millimoles per 100 grams of the solid matter in the resin composition, the total content of the sulfonium and propargyl group being not more than 400 millimoles per 100 grams of the solid matter in the resin composition.

### DETAILED DESCRIPTION OF THE INVENTION

The cationic electrodeposition coating composition of the present invention contains a rust preventive comprising a calcium- and/or zinc-containing phosphite salt or silicate compound. When said rust preventive is a silicate compound, calcium and/or zinc may be contained therein in the form of a silicate salt or, further, may occur in a form supported on a carrier such as silica or zeolite. As typical examples of said rust preventive, there may be mentioned, among others, calcium phosphite, calcium zinc phosphite, zinc phosphite, calcium-on-silica and calcium-on-zeolite. Said non-metal rust preventive may comprise one single species or a combination of two or more species. From the environmental protection viewpoint, heavy metal-free species are preferred, hence the use of a rust preventive comprising a calcium-containing phosphite salt or silicate compound is most preferred.

The content of the above rust preventive in the cationic electrodeposition coating composition of the present invention is preferably 0.1 to 35% by weight, more preferably 0.5 to 25% by weight, relative to the solid matter in the cationic electrodeposition coating composition. When the content of said rust preventive is less than 0.1% by weight, the coatings obtained will be insufficient in corrosion resistance and rust preventing effect. When it is in excess of 35% by weight, the physical properties of the coatings obtained will possibly be reduced.

The cationic electrodeposition coating composition of the present invention comprises a sulfonium- and propargyl-containing resin composition. The resin, which constitutes said resin composition, may have both sulfonium and propargyl groups in each molecule. This is not always necessary, however. Thus, for example, one molecule may have either of the sulfonium and propargyl groups. In that case, the resin composition as a whole has both of these two curing functional groups. Thus, said resin composition may comprise a sulfonium- and propargyl-containing resin or a mixture of a sulfonium-containing resin and a propargyl-containing resin, or a mixture of all of these. The resin composition contained in the cationic electrodeposition coating composition of the present invention has sulfonium and propargyl groups in the above sense.

Said sulfonium group is a hydratable functional group in the resin composition mentioned above. When a voltage or current not lower than a specific level is applied thereto in the process of electrodeposition coating, the sulfonium group can be irreversibly converted to a passive state as a result of its electrolytic reduction on the electrode, hence loss of its ionicity. This is supposedly the reason why the cationic electrodeposition coating composition of the present invention can show high throwing power.

It is also presumable that, in this process of electrodeposition coating, an electrode reaction be induced to form a hydroxide ion and the sulfonium ion hold this hydroxide ion to form an electrolytically generated base in the electrodeposited coating. Said electrolytically generated base can convert the propargyl group, which occurs in the electrodeposited coating and is low in reactivity upon heating, to an allene bond, which is higher in reactivity upon heating.

The resin, which constitute the backbone of the resin composition contained in the cationic electrodeposition coating composition of the present invention, is not particularly restricted but is preferably an epoxy resin. Suited for use as the epoxy resin are those having at least two epoxy groups per molecule, more specifically epi-bis type epoxy resins, derivatives thereof as obtained by chain extension with a diol, a dicarboxylic acid, a diamine or the like; epoxidized polybutadiene; novolak phenol type polyepoxy resins; novolak cresol type polyepoxy resins; polyglycidyl acrylate; aliphatic polyol or polyether polyol polyglycidyl ethers; polybasic carboxylic acid polyglycidyl esters; and like polyepoxy resins. Among them, novolak phenol type polyepoxy resins, novolak cresol type polyepoxy resins and polyglycidyl acrylate are preferred because they can easily be polyfunctionalized for curability improvement. Said epoxy resin may partly comprise a monoepoxy resin.

The resin composition contained in the cationic electrodeposition coating composition of the present invention comprises a resin the backbone chain of which is the above epoxy resin. It has a number average molecular weight of 500 to 20,000. When the number average molecular weight is below 500, the coating efficiency of the cationic electrodeposition coating is poor. If it is above 20,000, no good coating can be formed on the surface of a substrate or article to be coated. Said number average molecular weight can be selected within a more preferred range, which depends on the resin backbone. In the case of novolak phenol type epoxy resins and novolak cresol type epoxy resins, for instance, it is preferably within the range of 700 to 5,000.

The sulfonium group content in the above resin composition is 5 to 400 millimoles per 100 grams of the solid matter in said resin composition on condition that the requirement relative to the total content of sulfonium and propargyl groups, which is to be mentioned later herein, is satisfied. When it is less than 5 millimoles per 100 grams, no sufficient throwing power or curability cannot be attained and the hydratability and bath stability will be poor. If it is in excess of 400 millimoles per 100 grams, the coating deposition on the substrate surface becomes poor. Said sulfonium group content can be selected within a more preferred range, which depends on the resin backbone employed. In the case of novolak phenol type epoxy resins and novolak cresol type epoxy resins, for instance, it is preferably within the range of 5 to 250, most preferably 10 to 150 millimoles, per 100 grams of the solid matter in the resin composition.

The propargyl group which the above-mentioned resin composition has is improved in reactivity upon conversion to an allene bond, as mentioned above, and thus can constitute a curing system. Furthermore, for unknown reasons, the throwing power of the cationic electrodeposition coating composition can be further improved when said group coexists with the sulfonium group.

The propargyl group content in the above-mentioned resin composition is 10 to 495 millimoles per 100 grams of the solid matter in said resin composition on condition that the requirement relative to the total content of sulfonium and propargyl groups, which is to be mentioned later herein, is satisfied. If it is less than 10 millimoles per 100 grams, sufficient throwing power or curability cannot be obtained. If it is in excess of 495 millimoles per 100 grams, the hydration stability of the cationic electrodeposition coating composition in which said resin composition is used may adversely be affected. Said propargyl group content can be selected within a more preferred range, which depends on the resin backbone employed. In the case of novolak phenol type epoxy resins and novolak cresol type epoxy resins, for instance, it is preferably within the range of 20 to 395 millimoles per 100 grams of the solid matter in the resin composition.

The total content of the sulfonium and propargyl groups in the above resin composition is not more than 500 millimoles per 100 grams of the solid matter in the resin composition. If it is in excess of 500 millimoles per 100 grams, no resin may be obtained in practice or the desired performance characteristics may not be obtained in certain instances. Said total content of sulfonium and propargyl groups which the resin composition mentioned above has can be selected within a more preferred range, which depends on the resin backbone employed. In the case of novolak phenol type epoxy resins and novolak cresol type epoxy resins, for instance, it is preferably within the range of not more than 400 millimoles.

The propargyl groups in the resin composition contained in the cationic electrodeposition coating composition of the present invention may partly be in an acetylide form. The acetylide is a salt-like metal compound with acetylene. The content of those propargyl groups occurring in the form of acetylide in the above resin composition is preferably 0.1 to 40 millimoles per 100 grams of the solid matter in the resin composition. When it is less than 0.1 millimole, the effect of the acetylide form cannot be fully produced, while it is difficult to attain an acetylide content exceeding 40 millimoles. Said content can be selected within a more preferred range which depends on the metal employed.

The metal contained in the acetylide-form propargyl group is not particularly restricted but may be any metal showing catalytic activity. As examples, there may be mentioned transition metals such as copper, silver and barium. Among them, copper and silver are preferred because of their environmental friendliness and copper is more preferred in view of its readily availability. Where copper is used, the content of the propargyl group in acetylide form is more preferably 0.1 to 20 millimoles per 100 grams of the solid matter in the resin composition.

By converting part of the propargyl groups in the resin composition contained in the cationic electrodeposition coating composition of the present invention to an acetylide form, it is possible to introduce a curing catalyst into the resin. By doing so, it becomes generally unnecessary to use an organic transition metal complex hardly soluble or dispersible in organic solvents or water. Since even a transition metal can easily be introduced, in an acetylide form, into the resin, the transition metal can be freely used in the coating composition even when the corresponding transition metal compound is a hardly soluble one. Furthermore, the occurrence of an organic acid anion in the electrodeposition bath, as is found when a transition metal organic acid salt is used, can be avoided and, in addition, the problem that the metal ion is removed upon ultrafiltration is no more caused. The bath control and cationic electrodeposition coating composition designing become easy.

The resin composition contained in the cationic electrodeposition coating composition of the present invention may contain a carbon-carbon double bond, if desirable. The carbon-carbon double bond is highly reactive and, therefore, can further improve the curability.

The content of said carbon-carbon double bond is preferably 10 to 485 millimoles per 100 grams of the solid matter in the resin composition on condition that the requirement relative to the total content of the propargyl group and carbon-carbon double bond, which is to be mentioned later herein, is satisfied. If it is less than 10 millimoles per 100 grams, said bond cannot contribute toward attaining sufficient curability. When it is in excess of 485 millimoles per 100 grams, the stability of the hydrated form when said resin composition is used in a cationic electrodeposition coating composition may possibly be adversely affected. Said carbon-carbon double bond content can be selected within a more preferred range depending on the resin backbone employed. In the case of novolak phenol type epoxy reins and novolak cresol type epoxyresins, for instance, said content is preferably 20 to 375 millimoles per 100 grams of the solid matter in the resin composition.

In cases where the resin composition contains the above carbon-carbon double bond, the total content of the above propargyl group and carbon-carbon double bond is preferably within the range of 80 to 450 millimoles per 100 grams of the solid matter in the resin composition. When it is less than 80 millimoles, the curability may possibly be insufficient. If it exceeds 450 millimoles, the sulfonium group content must be reduced and, as a result, the throwing power may possibly become insufficient. The total content of the propargyl group and carbon-carbon double bond can be selected within a more preferred range depending on the resin backbone employed. In the case of novolak phenol type epoxy resins and novolak cresol type epoxy resins, for instance, said total content is preferably 100 to 395 millimoles.

Furthermore, in cases where the resin composition contains the above carbon-carbon double bond, the total content of the above sulfonium group, propargyl group and carbon-carbon double bond is preferably not more than 500 millimoles per 100 grams of the solid matter in the resin composition. If it exceeds 500 millimoles, no resin may be obtained in practice or the desired performance characteristics may not be obtained in certain instances. Said total content of sulfonium group, propargyl group and carbon-carbon double bond can be selected within a more preferred range depending on the resin backbone employed. In the case of novolak phenol type epoxy resins and novolak cresol type epoxy resins, for instance, said total content is preferably not more than 400 millimoles.

The resin composition to be contained in the cationic electrodeposition coating composition of the present invention can judiciously be produced, for example, by the step (i) of reacting an epoxy resin having at least two epoxy groups per molecule with a compound having a functional group capable of reacting with the epoxy group, together with a propargyl group, to give a propargyl-containing epoxy resin composition and the step (ii) of reacting the remaining epoxy group(s) in the propargyl-containing epoxy resin composition obtained in step (i) with a sulfide/acid mixture to thereby introduce a sulfonium group or groups into said resin composition.

Said compound having a functional group capable of reacting with the epoxy group together with a propargyl group (hereinafter such compound is referred to as "compound (A)") may be a compound having a hydroxy or carboxyl group or like functional group capable of reacting with the epoxy group, together with a propargyl group and specifically includes propargyl alcohol, propargylic acid and the like. Among them, propargyl alcohol is preferred because of its ready availability and ease of reaction.

In cases where the resin composition to be contained in the cationic electrodeposition coating composition of the present invention has a carbon-carbon double bond as necessary, a compound having a functional group capable of reacting with the epoxy group together with a carbon-carbon double bond (hereinafter such compound is referred to as "compound (B)") is used in combination with the above-mentioned compound A in the above step (i). Said compound (B) may be, for example, a compound having a hydroxy or carboxyl group or like functional group capable of reacting with the epoxy group, together with a carbon-carbon double bond. Specifically, when the functional group capable of reacting with the epoxy group is a hydroxy group, there may be mentioned 2-hydroxyethyl acrylate, 2-hydroxyethyl methacrylate, hydroxypropyl acrylate, hydroxypropyl methacryalte, hdyroxybutyl acrylate, hydroxybutyl methacryalte, allyl alcohol, methallyl alcohol and the like. When the functional group capable of reacting with the epoxy group is a carboxyl group, mention may be made of acrylic acid, methacrylic acid, ethacrylic acid, crotonic acid, maleic acid, phthalic acid, itaconic acid; half esters such as maleic acid ethyl ester, fumaric acid ethyl ester, itaconic acid ethyl ester, succinic acid mono(meth)acryloyloxyethyl ester and phthalic acid mono(meth)acryloyloxyethyl ester; synthetic unsaturated fatty acids such as oleic acid, linolic acid and ricinolic acid; and natural unsaturated fatty acids such as linseed oil and soybean oil, among others.

In the above step (i) , said epoxy resin having at least two epoxy groups per molecule is reacted with said compound (A) to give a propargyl-containing epoxy resin composition, or said epoxy resin is reacted with said compound (A) together with said compound (B) as necessary, to give a propargyl- and carbon-carbon double bond-containing epoxy resin composition. In the latter case, said compound (A) and compound (B) may be admixed beforehand and submitted to reaction in step (i) or said compound (A) and compound (B) may be separatedly submitted to reaction in said step. That functional group capable of reacting the epoxy group which the compound (A) has may be the same as or different from that functional group capable of reacting with the epoxy group which the compound (B) has.

In the above step (i), the proportions of compound (A) and compound (B), both to be submitted to reaction may be selected so that the desired functional group contents, for instance the total content of the propargyl group and carbon-carbon double bond specifically mentioned hereinabove, may be obtained.

The reaction in the above step (i) is generally carried out at room temperature to 80-140°C for several hours. If necessary, a known component or components required for the reaction to proceed, for example a catalyst and/or a solvent, may be used. The completion of the reaction can be checked by measuring the epoxy equivalent, and the functional group(s) introduced can be confirmed by subjecting the resin composition obtained to nonvolatile matter measurement and/or instrumental analysis. Generally, the thus-obtained reaction product is a mixture of epoxy resins having one or a plurality of propargyl groups or a mixture of epoxy resins having a propargyl group or groups and one or a plurality of carbon-carbon double bonds. In this sense, the above step (i) gives a propargyl-containing, or propargyl- and carbon-carbon double bond-containing resin composition.

In the above step (ii), the remaining epoxy groups in the propargyl-containing epoxy resin composition obtained in the above step (i) is reacted with a sulfide/acid mixture for the introduction of a sulfonium group. The sulfonium group introduction is carried out, for instance, by the method comprising reacting the sulfide/acid mixture with the epoxy group for sulfide introduction and conversion to sulfonium or by the method comprising effecting sulfide introduction and further converting the sulfide introduced to a sulfonium using an alkyl halide, such as methyl fluoride, methyl chloride or methyl bromide, followed by anion exchange when necessary. From the view point of ready a vailability of raw materials, the method which uses a sulfide/acid mixture is preferred.

Said sulfide is not particularly restricted but includes, among others, aliphatic sulfides, aliphatic-aromatic mixed sulfides, aralkyl sulfides and cyclic sulfides. More specifically, there may be mentioned diethyl sulfide, dipropyl sulfide, dibutyl sulfide, dihexyl sulfide, diphenyl sulfide, ethyl phenyl sulfide, tetramethylene sulfide, pentamethylene sulfide, thiodiethanol, thiodipropanol, thiodibutanol, 1-(2-hydroxyethylthio)-2-propanol, 1-(2-hydroxyethylthio)-2-butanol, 1-(2-hydroxyethylthio)-butoxy-1-propanol and the like.

The acid mentioned above is not particularly restricted but includes, among others, formic acid, acetic acid, lactic acid, propionic acid, boric acid, butyric acid, dimethylolpropionic acid, hydrochloric acid, sulfuric acid, phosphoric acid, N-acetylglycine, N-acetyl-β-alanine and the like.

Generally, the mixing molar ratio between said sulfide and acid in the sulfide/acid mixture (sulfide/acid) is preferably about 100/60 to 100/100.

The reaction in the above step (ii) can be carried out, for example, by mixing the propargyl-containing epoxy resin composition obtained in the step (i) and a mixture of predetermined amounts of said sulfide and acid sufficient to give the sulfonium group content mentioned above, for instance, with water in an amount 5 to 10 moles per mole of the sulfide used and then stirring generally at 50-90°C for several hours. The end point of the reaction can be estimated by the fact that the residual acid value becomes 5 or less. The sulfonium group introduction into the resin composition obtained can be confirmed by potentiometric titration. In cases where sulfide introduction is followed by conversion to sulfonium, the process can be carried out in the same manner as mentioned above. By effecting sulfonium introduction after propargyl group introduction, as mentioned above, the sulfonium group can be prevented from being decomposed upon heating.

In cases where part of the propargyl groups in the resin composition to be contained in the cationic electrodeposition coating composition is converted to an acetylide form, the step of acetylidization may comprise reacting the propargyl-containing epoxy resin composition obtained in the above step (i) with a metal compound to thereby convert part of the propargyl groups in said epoxy resin composition to the corresponding acetylide form. Said metal compound is preferably a transition metal compound capable of acetylide formation and includes, among others, complexes and salts of transition metals such as copper, silver and barium. More specifically, there may be mentioned copper acetylacetonate, copper acetate, silver acetylacetonate, silver acetate, silver nitrate, barium acetylacetonate, barium acetate and the like. Among them, copper and silver compounds are preferred from the viewpoint of environment-friendliness, and copper compounds are more preferred from the viewpoint of ready availability. Thus, for instance, copper acetylacetonate is suited for use in view of ease of bath control.

As for the reaction conditions, the conversion of part of the propargyl groups to an acetylide form is generally carried out at 40-70°C for several hours. The progress of the reaction can be checked, for example, by coloration of the resin composition obtained or by nuclear magnetic resonance spectrometry, namely through disappearance of the methyne proton signal. The time point of the acetylide formation reaction at which conversion of a desired proportion of the propargyl groups to an acetylide form is attained is confirmed in that manner and, at that time point, the reaction is terminated. The reaction product obtained is generally a mixture of epoxy resins in which one or a plurality of propargyl groups are in an acetylide form. The thus-obtained epoxy resin composition having part of the propargyl groups in an acetylide form can be subjected to the above step (ii) for sulfonium introduction thereinto.

The step of converting part of the propargyl groups owned by the epoxy resin composition to an acetylide form and the above step (ii) can be carried out simultaneously since common reaction conditions can be selected for both steps. When both steps are carried out simultaneously, the production process can advantageously be simplified.

In this manner, a propargyl- and sulfonium-containing and optionally carbon-carbon double bond-containing resin composition optionally having part of the propargyl groups in an acetylide form can be produced while preventing the sulfonium group(s) from being decomposed. Although acetylides, when in a dry state, have explosiveness, the acetylidization reaction in the practice of the present invention can be carried out in an aqueous medium to give the desired substance as an aqueous composition, taking safety problems in consideration.

The cationic electrodeposition coating composition of the present invention contains the above resin composition. In the cationic electrodeposition coating composition of the present invention, the use of a curing agent is not always necessary, since said resin composition itself has curability. For further improving the curability, however, a curing agent may be used. As such curing agent, there may be mentioned, among others, compounds obtained by reacting a compound having a plurality of propargyl groups and/or carbon-carbon double bonds, such as polyepoxides derived from novolak phenol or the like, or pentaerythritol tetraglycidiyl ether, with a propargyl-containing compound, such as propargyl alcohol, and/or a carbon-carbon double bond-containing compound, such as acrylic acid in the manner of addition reaction.

In the cationic electrodeposition coating composition of the present invention, it is not always necessary to use a curing catalyst. In cases where it is necessary to further improve the curability depending on the reaction conditions, however, a transition metal compound or some other curing catalyst in general use may be added, when necessary, in an appropriate amount. Such compound is not particularly restricted but includes, among others, complexes or compounds resulting from binding of a ligand, such as cyclopentadiene or acetylacetone, or a carboxylic acid, such as acetic acid, to a transition metal, such as nickel, cobalt, manganese, palladium or rhodium. Said curing catalyst is used preferably in an amount of 0.1 to 20 millimoles per 100 grams of the resin solid matter in the cationic electrodeposition coating composition.

An amine may be incorporated in the cationic electrodeposition coating composition of the present invention. The incorporation of an amine results in an increased rate of conversion of the sulfonium group to a sulfide form as a result of electrolytic reduction in the electrodeposition process. Said amine is not particularly restricted but includes, among others, amine compounds, for example primary to tertiary, monofunctional or polyfunctional aliphatic amines, alicyclic amines and aromatic amines. Among them, water-soluble or water-dispersible ones are preferred and thus, for instance, mention may be made of alkylamines containing 2 to 8 carbon atoms, such as monomethylamine, dimethylamine, trimethylamine, triethylamine, propylamine, diisopropylamine and tributylamine; monoethanolamine, diethanolamine, methylethanolamine, dimethylethanolamine, cyclohexylamine, morpholine, N-methylmorpholine, pyridine, pyrazine, piperidine, imidazoline, imidazole and the like. These may be used singly or two or more of them may be used combinedly. Among them, hydroxyamines, such as monoethanolamine, diethanolamine and dimethylethanolamine, are preferred owing to their affording stable aqueous dispersions.

Said amine can be directly incorporated into the cationic electrodeposition coating composition of the present invention. While, in the prior art cationic electrodeposition coating compositions of the neutralized amine type, the addition of a free amine results in deprivation of the neutralizing acid in the resin, leading to a marked decrease in stability of the electrodeposition solution, such bath stability impairment is never encountered in the practice of the present invention.

Said amine is added preferably in an amount of 0.3 to 25 meq (milliequivalents) per 100 grams of the resin solid matter in the cationic electrodeposition coating composition. When it is less than 0.3 meq/100 grams, the effect on the throwing power cannot be sufficient. At addition levels above 25 meq/100 grams, any additional effect corresponding to the addition level cannot be obtained and this is uneconomical. An addition level of 1 to 15 meq/100 grams is more preferred.

It is also possible to incorporate an aliphatic hydrocarbon group-containing resin composition in the cationic electrodeposition coating composition of the present invention. By incorporating said aliphatic hydrocarbon group-containing resin composition, the coatings obtained are improved in impact resistance. As said aliphatic hydrocarbon group-containing resin composition, there may be mentioned those which contain 5 to 400 millimoles of a sulfonium group, 80 to 135 millimoles of an aliphatic hydrocarbon group which contains 8 to 24 carbon atoms and may optionally contain an unsaturated double bond in the chain thereof, and 10 to 315 millimoles of an unsaturated double bond-terminated organic group containing 3 to 7 carbon atoms and/or a propargyl group, per 100 grams of the solid matter in the resin composition and which has a total content of said sulfonium group, C₈-C₂₄ aliphatic hydrocarbon group (optionally containing an unsaturated double bond) and unsaturated double bond-terminated organic group containing 3 to 7 carbon atoms and/or propargyl group of not more than 500 millimoles per 100 grams of the solid matter in the resin composition.

When such aliphatic hydrocarbon group-containing resin composition is incorporated in the above cationic electrodeposition coating composition, it is preferred that the sulfonium group content be 5 to 400 millimoles, the content of the aliphatic hydrocarbon group which contains 8 to 24 carbon atoms and may contain an unsaturated double bond in the chain thereof be 10 to 300 millimoles and the total content of the propargyl group and the unsaturated double bond-terminated C₃-C₇ organic group be 10 to 485 millimoles, per 100 grams of the resin solid matter in the cationic electrodeposition coating composition, the total content of the sulfonium group, C₈-C₂₄ aliphatic hydrocarbon group (optionally containing an unsaturated double bond in the chain), propargyl group and unsaturated double bond-terminated C₃-C₇ organic group be not more than 500 millimoles per 100 grams of the resin solid matter in the cationic electrodeposition coating composition and the content of said C₈-C₂₄ aliphatic hydrocarbon group optionally containing an unsaturated double bond in the chain thereof be 3 to 30% by weight relative to the resin solid matter in the cationic electrodeposition coating composition.

If, when an aliphatic hydrocarbon group-containing resin composition is incorporated in the above cationic electrodeposition coating composition, the sulfonium group content is less then 5 millimoles per 100 grams, sufficient throwing power and/or curability cannot be attained and the hydratability and bath stability tends to become worse. If said content exceeds 400 millimoles per 100 grams, the coating deposition on the substrate surface becomes poor. If the content of the C₈-C₂₄ aliphatic hydrocarbon groups optionally containing an unsaturated double bond in the chain thereof is less than 80 millimoles per 100 grams, the impact resistance cannot be improved to a satisfactory extent. If it exceeds 350 millimoles per 100 grams, the resin composition becomes difficult to handle. If the total content of the propargyl group and unsaturated double bond-terminated C₃-C₇ organic group is less than 10 millimoles per 100 grams, sufficient curability cannot be obtained even when another resin and/or a curing agent is used in combination. If it is above 315 millimoles per 100 grams, the impact resistance is improved only to an unsatisfactory extent. The total content of the sulfonium group, C₈-C₂₄ aliphatic hydrocarbon group (optionally containing an unsaturated double bond in the chain), propargyl group and unsaturated double bond-terminated C₃-C₇ organic group is not more than 500 millimoles per 100 grams of the solid matter in the resin composition. If it exceeds 500 millimoles, no resin may be obtained in practice or the desired performance characteristics may not be obtained in some instances.

The cationic electrodeposition coating composition of the present invention may contain a further component or components commonly used in cationic electrodeposition coating compositions in general, if necessary. Said further components are not particularly restricted but include, among others, such paint additives as color pigments, pigment-dispersing resins, surfactants, antioxidants and ultraviolet absorbers.

Said color pigments are not particularly restricted but includes, among others, those used in cationic electrodeposition coating compositions in general, such as titanium dioxide, carbon black, iron oxide red and like color pigments; kaolin, clay, talc and like fillers or extenders. In cases where such a color pigment is used in the cationic electrodeposition coating composition of the present invention, the total amount of said color pigment and the rust preventive mentioned above is preferably not more than 50% by weight relative to the solid matter in the cationic electrodeposition coating composition.

The above pigment dispersing resins are used for stably dispersing said color pigments in the cationic electrodeposition coating composition. Said pigment dispersing resins are not particularly restricted but includes those in general use. Sulfonium- and unsaturated bond-containing pigment dispersing resins may also be used. Such pigment dispersing resins can be obtained, for example by reacting a bisphenol type epoxy resin with a half-blocked isocyanate and reacting the resulting hydrophobic epoxy resin with a sulfide compound or by reacting the above resin with a sulfide compound in the presence of a monobasic acid and a hydroxy-containing dibasic acid.

The cationic electrodeposition coating composition of the present invention can be prepared, for example by admixing the above resin composition with the ingredients mentioned above as necessary, followed by effecting dissolution or dispersion in water. When said composition is to be used for cationic electrodeposition coating, adjustment is preferably made so that a bath liquid with a nonvolatile matter content of 10 to 30% may be obtained. It is also preferred that the propargyl group, carbon-carbon double bond and sulfonium group contents be adjusted without departing the respective ranges specified above in relation to the resin composition.

The cationic electrodeposition coating composition according to present invention is preferably adjusted so that the curing temperature therefor may be within the range of 130°C to 220°C. If the curing temperature is lower than 130°C, the smoothness of the double-layer coatings obtained by subjecting a coating obtained by using the cationic electrodeposition coating composition of the present invention to a further coating procedure may possibly be deteriorated. If the curing temperature is above 220°C, such double-layer coatings may have poor film properties due to undercuring or the multilayer coatings resulting from further application of a top coat composition to said double-layer coatings may have the color difference problem.

The substrate, or article to be coated, to be subjected to electrodeposition coating using the cationic electrodeposition coating composition of the present invention is not particularly restricted but may be any one having electroconductivity, for example, a plate or sheet, for example, iron, steel or aluminum, a surface-treated version thereof, or a molding thereof.

Said electrodeposition coating is carried out by immersing the substrate, which is to serve as a cathode, in a bath comprising the cationic electrodeposition coating composition and applying a voltage generally of 50 to 450 V between said cathode and an anode. If the voltage applied is lower than 50 V, the electrodeposition will be insufficient. If it exceeds 450 V, the power consumption will become uneconomically excessive. When the composition of the present invention is used and a voltage within the above range is applied, a uniform coating can be formed all over the substrate without an abrupt increase in coating thickness in the process of electrodeposition. When the above voltage is applied, it is generally preferred that the cationic electrodeposition coating composition bath temperature be 10 to 45°C. The period for voltage application may be selected generally within the range of 2 to 4 minutes although it may vary depending on the electrodeposition conditions.

In the electrodeposition coating process, after above-mentioned cationic electrodeposition, a voltage can be further applied to the coating deposited upon application of a voltage between the substrate, which is the cathode, and the anode, to thereby increase the electric resistance per unit volume of said coating.

After completion of the electrodeposition process, the thus-obtained electrodeposited coating is cured, either as such or after washing with water, by baking at 120 to 260°C, preferably 160 to 220°C, for 10 to 30 minutes to complete the coating process. It is also possible to adopt the two-coat one-bake technique which comprises forming an uncured intermediate coating on the electrodeposited coating obtained in the above manner by applying an intermediate coating composition, which is to be mentioned later herein, without curing said electrodeposited coating, in the so-called wet-on-wet manner, and heating both the uncured coatings simultaneously to give a double-layer coating.

It is preferred that the cured electrodeposited coating formed by using the cationic electrodeposition coating composition of the present invention have a thickness of 10 to 25 µm. If it is less than 10 µm, the rust resistance will be insufficient. If it exceeds 25 µm, the extra amount of the coating composition may be a waste of material.

The substrate having a cured coating formed from the cationic electrodeposition coating composition of the present invention can further be provided with an intermediate coat and/or a top coat required for the intended use. Thus, when the substrate is an automotive sheathing or shell plate, for instance, an intermediate coating composition of the heat-curing type is generally used which comprises a binder and a curing agent and meets those performance characteristics requirements imposed on the intermediate coating composition for automobiles with respect to adhesiveness, smoothness, sharp reflectiveness, overbaking resistance and weathering resistance, among others. As said binder, there may be mentioned, among others, acrylic resins, polyester resins, alkyd resins and epoxy resins. Said curing agent may be selected from among a variety of species, such as amino resins, blocked isocyanate compounds, aliphatic polybasic carboxylic acids and anhydrides thereof, epoxy resins and so forth, according to the curing functional group(s) contained in said binder. The above intermediate coating composition may take various forms such as the solvent type, aqueous or aqueous dispersion type, or the powder form.

On the other hand, the top coating composition to be used is preferably one generally used as a top coating composition for automobiles and capable of giving a top coat excellent in such properties as finished appearance (sharp reflectiveness, smoothness, gloss, etc.), weathering resistance (gloss retention, color retention, chalking resistance, etc.), chemical resistance, water resistance, moisture resistance and curability. As such, there may be mentioned solid color paints used as one-coat solids as well as base paints and clear paints capable of being applied by the two-coat one-bake coating technique. These top coating compositions preferably are of the heat-curing type and contain a binder and a curing agent. Those binders and curing agents specifically mentioned hereinabove in relation to the intermediate coating composition may be used also as said binder and curing agent in the top coating compositions. The above-mentioned solid color paints contain one or more of inorganic or organic color pigments well known in the art, such as carbon black, phthalocyanine blue and titanium dioxide. Said base paints may contain a well-known reflecting material or metallic flake pigment, such as flaky aluminum or flaky mica, in addition to the above-mentioned inorganic or organic color pigments. The clear paints mentioned above, on the other hand, essentially contain no pigment. They may, however, contain such color pigments and/or reflecting materials in amounts not impairing the transparency thereof. These top coating compositions may be of the water, solvent or powder type. From the environmental protection viewpoint, however, they are preferably of the water-based or powder type. The water-based form can be obtained, for example by neutralizing the carboxyl groups of the binder with an amine to provide solubility in water, while the powder form can be obtained by adjusting the glass transition temperature to a level higher than room temperature.

The above intermediate and top coating compositions may contain one or more of fillers, curing accelerators, leveling agents, ultraviolet absorbers, light stabilizers, and other additives. When the rust preventive to be contained in the cationic electrodeposition coating composition of the present invention is incorporated also in the intermediate coating composition in an amount of 2 to 30% by weight on the solid basis, the corrosion resistance and rust preventing ability can further be improved.

Said intermediate and top coating compositions can be applied by a method well known in the art as selected depending on the form of the coating composition. Thus, for instance, spray coating, brushing, dipping or electrostatic coating can be employed. In the coating step in an automotive body production line, in particular, the electrostatic coating method is preferably employed. As regards the coating thicknesses of said intermediate and top coating compositions as well as the heating conditions to be employed after application, appropriate values and conditions can be selected according on the respective coating composition species.

Double-layer coatings can be obtained by providing a coating obtained from the cationic electrodeposition coating composition of the present invention with an intermediate coat layer and a top coat layer.

### EXAMPLES

The following examples illustrate the present invention in further detail. They are, however, by no means limitative of the scope of the present invention.

### Production Example 1

### Production of a sulfonium- and propargyl-containing epoxy resin composition

A separable flask equipped with a stirrer, thermometer, nitrogen inlet tube and reflux condenser was charged with 100.0 weight parts of Epo Tohto™ YDCN-701 (cresol novolak type epoxy resin; product of Tohto Kasei) with an epoxy equivalent of 200.4, 23.6 weight parts of propargyl alcohol and 0.3 weight part of dimethylbenzylamine, the temperature was raised to 105°C, and the reaction was allowed to proceed for 3 hours, to give a propargyl-containing resin composition with an epoxy equivalent of 1580. To this was added 2.5 weight parts of copper acetylacetonate, and the reaction was allowed to proceed at 90°C for 1.5 hours. Partial disappearance of the terminal hydrogen of the propargyl group as a result of addition was confirmed by proton (1H) NMR (the content of the acetylide-form propargyl corresponding to 14 millimoles per 100 grams of the resin solid matter). Thereto were added 10.6 weight parts of 1-(2-hydroxyethylthio)-2,3-propanediol, 4.7 weight parts of glacial acetic acid and 7.0 weight parts of deionized water, and the reaction was allowed to proceed while maintaining the temperature at 75°C for 6 hours. Then, after confirming that the residual acid value was not more than 5, 43.8 weight parts of deionized water was added, to give the desired resin composition in solution form. This had a solid content of 70.0% by weight, a sulfonium value of 28.0 millimoles per 100 grams of the varnish. The number average molecular weight (expressed in terms of polystyrene equivalent) was 2443.

### Production Example 2

### Production of a polyester resin composition

A separable flask equipped with a stirrer, thermometer, nitrogen inlet tube, reflux condenser and water trap was charged with 415 weight parts of isophthalic acid, 90 weight parts of adipic acid, 100 weight parts of trimethylolpropane, 200 weight parts of neopentyl glycol, 195 weight parts of 2,2-dimethyl-3-hydroxypropyl 2,2-dimethyl-3-hydroxypropionate and 2 weight parts of dibutyltin oxide, and the temperature was raised to 210°C. From 160°C to 210°C, however, the temperature was raised at a constant rate over 3 hours. The water resulting from condensation was distilled off out of the system utilizing the water trap. After the temperature reached 210°C, that temperature was maintained for 1 hour and then 30 weight parts of xylene was added, as a refluxing solvent, gradually into the separable flask to change over to condensation in the presence of the solvent, and the reaction was continued. When the acid value of the resin solid matter reached 8.5 mg KOH/g, the reaction mixture was cooled to 150°C, 200 weight parts of ε -caprolactone was added, the temperature was maintained at 150°C for 2 hours and then the mixture was cooled to 100°C. Further, 430 weight parts of xylene was added, to give a polyester resin composition with a number average molecular weight of 3000, an acid value of 7 mg KOH/g and a hydroxy value of 93 mg KOH/g of the resin solid matter, and a nonvolatile matter content of 70% by weight.

### Production Example 3

### Production of a rust preventive-free intermediate coating composition

To 480 weight parts of the polyester resin composition obtained in Production Example 2 were added 70 weight parts of xylene, 250 weight parts of titanium dioxide R-61N (product of Sakai Chemical Industry), 135 weight parts of barium sulfate B-34 (product of Sakai Chemical Industry), 10 weight parts of talc LMR-100 (product of Fuji Talc Kogyo), 5 weight parts of carbon black MA-100 (product of Mitsubishi Chemical), 5 weight parts of surface modifier BYK-161 (product of Byk Chemie) and 5 weight parts of organic bentonite New D Orben™ (product of Tsuchiya Kaolin Kogyo) and, after preliminary mixing, the mixture was stirred for attaining dispersion in a paint conditioner, with a glass bead medium added, at room temperature for 1 hour, to give a paste with a particle size not more than 5 µm and a nonvolatile matter content of 77%. In 96 weight parts of this paste were incorporated 28 weight parts of melamine resin Cymel™ 202 (product of Mitsui Cytec) and 0.1 weight part of surface modifier Resimix™ RL-4 (product of Mitsui Petrochemical), to give a rust preventive-free intermediate coating composition.

### Production Example 4

### Production of a rust preventive-containing intermediate coating composition

A rust preventive-containing intermediate coating composition was produced in the same manner as in Production Example 3 except that 88 weight parts of calcium phosphite was added in the step of paste preparation.

### Example 1

### Production of a cationic electrodeposition coating composition 1

To 138.6 weight parts of the epoxy resin composition obtained in Production Example 1 were added 3.0 weight parts of calcium phosphite as a rust preventive component, and 157.1 weight parts of deionized water and, after 1 hour of stirring using a high-speed rotary mixer, 373.3 weight parts of deionized water was further added to thereby adjust the solid concentration of the aqueous solution to 15% by weight. Thus was obtained a cationic electrodeposition coating composition.

### Example 2

### Production of cationic electrodeposition coating compositions 2 to 4

Cationic electrodeposition coating compositions 2 to 4 were obtained in the same manner as in Example 1 except that the respective rust preventive components specified in Table 1 were used in the same amount in lieu of calcium phosphite.

### Example 3

### Production of cationically electrodeposited coatings

The cationic electrodeposition coating compositions respectively obtained in Examples 1 and 2 were each transferred to a stainless steel vessel and used as an electrodeposition bath. A zinc phosphate-treated cold-rolled steel sheet (JIS G3141 SPCC-SD, treated with Nippon Paint's zinc phosphate-based treating agent Surfdyne™ SD-5000) was immersed in said bath to serve as a substrate and cathode, and electrodeposition coating was carried out to a dry coat film thickness of 15 µm. Thereafter, the coated substrate was taken out of the electrodeposition bath in the stainless steel vessel, washed with water, placed in a drying oven maintained at 180°C and heated for 30 minutes to give a cationically electrodeposited coating.

### Example 4

### Intermediate coating composition application

To the uncured coating obtained in Example 3 by using the cationic electrodeposition coating composition of Production Example 1 was applied the intermediate coating composition obtained in Production Example 2 or 3, by the air spray coating technique at 23°C to a dry coat film thickness of 35 µm. After 5 minutes of setting, each coated substrate was placed in a drying oven maintained at 140°C and heated for 30 minutes to give a double-layer coating composed of the cationically electrodeposited coating and intermediate coating.

### Comparative Example 1

A cationically electrodeposited coating was obtained in the same manner as in Example 3 except that the cationic electrodeposition coating composition Powertop™ U-30 (blocked isocyanate curing type basic amino group-containing resin-based cationic electrodeposition coating composition, containing basic lead silicate; product of Nippon Paint) was used in lieu of the electrodeposition coating composition of Example 1, that the temperature of the drying oven was maintained at 160°C and that the dry coat film thickness was 30 µm.

### Comparative Example 2

An electrodeposited coating was obtained in the same manner as in Comparative Example 1 except that the cationic electrodeposition coating composition Powertop™ U-30 contained calcium phosphite in lieu of basic lead silicate was used.

### Comparative Example 3

A double-layer coating was obtained by applying, to the cationically electrodeposited coating obtained in Comparative Example 2, the intermediate coating composition obtained in Production Example 3 in the same manner as in Example 4.

### Corrosion resistance evaluation test

The cationically electrodeposited coatings and double-layer coatings obtained in Examples 3 and 4 and Comparative Examples 1-3 were sprayed with a 5% aqueous solution of sodium chloride at 35°C for 960 hours according to JIS Z 2371. Each cross-cut section was subjected to a peeling test using an adhesive tape, the width of peeling was measured on one side of the cut section and, when it was less than 1.5 mm, the coating was regarded as passing the test. The results for the cationically electrodeposited coatings are shown in Table 1 and the results for the double-layer coatings in Table 2.

**Table 1**

| | Example | | | | Comparative Example | |
|---|---|---|---|---|---|---|
| Cationic ED coating composition | Production Example 1 | | | | Powertop U-30 | Powertop U-30 modified*¹ |
| Rust preventive | Calcium phosphite | Calcium zinc phosphite | Calcium -on-silica | Calcium -on-zeolite | Basic lead silicate | Calcium phosphite |
| Peeling width (mm) | 1.3 | 1.4 | 1.3 | 1.2 | 1.4 | 2.5 |

| | | | | | | |
|---|---|---|---|---|---|---|
| *¹ Powertop™ U-30 containing calcium phosphite in lieu of basic lead silicate. | | | | | | |

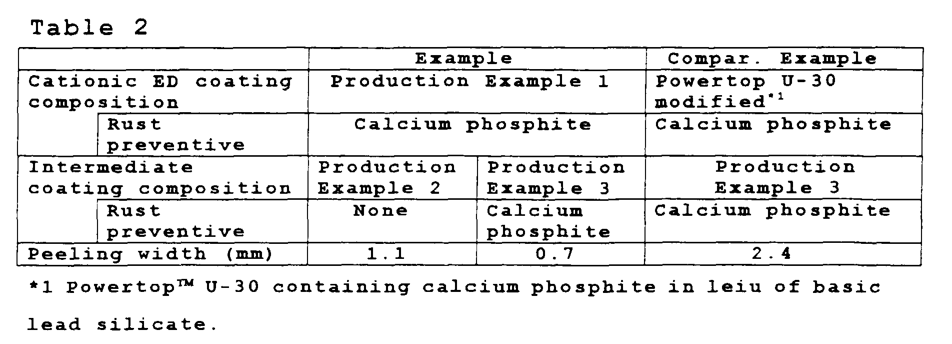

### EFFECTS OF THE INVENTION

The cationic electrodeposition coating composition of the present invention contains a rust preventive comprising a calcium- and/or zinc-containing phosphite or silicate compound and the coating obtained therefrom has high corrosion resistance in spite of the fact that it is lead compound-free. Said composition and coating thus can minimize the environmental pollution.

As the reasons why high corrosion resistance can be obtained without using any lead compound, there may be mentioned not only the addition of the rust preventive mentioned above but also the fact that the resin composition contained in the cationic electrodeposition coating composition of the present invention is by itself excellent in corrosion resistance. The high corrosion resistance of said resin composition is presumably due to the excellent throwing power of said composition which allows uniform coating formation all over the substrate surface and/or to the sulfonium and propargyl groups contained in said resin composition which may contribute to the improvement in rust preventing ability in some way or other.

In the cationic electrodeposition coating compositions of the present invention, a curing system based on addition polymerization, which is different from the conventional blocked isocyanate-based curing system, is employed, hence the curability is not so much influenced by the presence of a lead compound. Therefore, even when the system is deprived of the lead compound, it is not necessary to increase the amount of the metal catalyst.

## Claims

1. A cationic electrodeposition coating composition which comprises a rust preventive comprising a calcium- and/or zinc-containing phosphite salt or a silicate compound and a sulfonium- and propargyl-containing resin composition.

2. The cationic electrodeposition coating composition according to Claim 1, wherein the content of said rust preventive is 0.1 to 35% by weight.

3. The cationic electrodeposition coating composition according to Claim 1 or 2, wherein said resin composition has a sulfonium group content of 5 to 400 millimoles and a propargyl group content of 10 to 495 millimoles per 100 grams of the solid matter in the resin composition, the total content of the sulfonium and propargyl group being not more than 500 millimoles per 100 grams of the solid matter in the resin composition.

4. The cationic electrodeposition coating composition according to any of Claims 1 to 3, wherein said resin composition comprises a resin having an epoxy backbone.

5. The cationic electrodeposition coating composition according to Claim 4, wherein said epoxy resin is a novolak phenol type epoxy resin or novolak cresol type epoxy resin having a number average molecular weight of 700 to 5,000 and wherein said resin composition has a sulfonium group content of 5 to 250 millimoles and a propargyl group content of 20 to 395 millimoles per 100 grams of the solid matter in the resin composition, the total content of the sulfonium and propargyl group being not more than 400 millimoles per 100 grams of the solid matter in the resin composition.
